# EUROPÄISCHE PATENTANMELDUNG

(11) **EP 2 110 023 A1**
(43) Veröffentlichungstag der Anmeldung: **21.10.2009**
(21) Anmeldenummer: 09004685.5
(22) Anmeldetag: 31.03.2009
(51) Int. Cl.: A23G 1/12, A23G 1/14, A23G 1/16, B02C 4/04, B02C 4/14, B02C 4/22, B02C 4/30

(54) **Verfahren zur Verarbeitung einer Lebensmittelmasse**

(30) Priorität: 18.04.2008 DE 102008001271
(71) Anmelder: Bühler AG, 9240 Uzwil (CH)
(72) Erfinder: Braun, Peter, 8280 Kreuzlingen (CH); Bischof, Thomas, 6890 Lustenau (AT)
(74) Vertreter: Frommhold, Joachim

(57) **Zusammenfassung**

Die Erfindung bezieht sich auf die Verarbeiten einer Lebensmittelmasse, insbesondere einer suspendierte Partikel enthaltenden Fettmasse, wobei mittels einer Relativbewegung zwischen der in einem Prozessraum enthaltenen zu verarbeitenden Masse und einer die Masse berührenden Oberfläche einer Verarbeitungseinheit in die Masse mechanische Energie eingetragen wird. Erfindungsgemäss bestehen mindestens ein Teil der die Masse berührenden und zu ihr relativ bewegten gesamten Oberflächen der Verarbeitungseinheit aus einem nicht-metallischen Material, vorzugsweise einem KeramikMaterial.

## Beschreibung

Die Erfindung bezieht sich auf ein Verfahren zum Verarbeiten einer Lebensmittelmasse, insbesondere einer suspendierte Partikel enthaltenden Fettmasse wie z.B. Kakao- oder Schokolademasse.

Ein wichtiger Vertreter solcher Massen sind Schokolade oder schokoladeähnliche Lebensmittel, die je nach Sorte verschieden grosse Anteile Kakao-Partikel und Zucker-Partikel enthalten, die in einer Fettmasse suspendiert sind, die wiederum je nach Sorte verschieden grosse Anteile Fett pflanzlichen Ursprungs (z.B. Kakaobutter, Kokosfett und dgl.) oder tierischen Ursprungs (z.B. Milchpulver) enthalten.

Zur Herstellung derartiger Massen geht man typischerweise von Kakaobohnen aus. Die Kakaobohnen werden zunächst debakterisiert und dann zu Bruchstücken zerkleinert, wonach die Schalen entfernt und die Kern-Bruchstücke (Kakao-Nibs) anschliessend geröstet und schliesslich in Mühlen vermahlen werden, wobei das in den Kakaobohnen enthaltene gebundene Fett freigesetzt wird, so dass man eine fliessfähige Fettmasse mit darin suspendierten Kakao-Partikeln erhält.

Typischerweise enthalten die Kakaobohnen-Bruchstücke 20 bis 40 ppm (bzw. mg/kg) Metallpartikel, vorzugsweise an ihrer Oberfläche, die u.a. aus Abrieb von Maschinenteilen aus Metall stammen, mit denen die Kern-Bruchstücke während ihrer Herstellung (z.B. Grobzerkleinerung im Brecher, Aromaentwicklung im Röster) in Kontakt gelangen. Dieser Metallanteil steigt während der weiteren Verarbeitung (Vermahlung in Rührwerkskugelmühle, Feinvermahlung im Walzwerk) noch weiter an. Typischerweise entstehen dabei Kakaomassen mit Metallgehalten von über 50 ppm (einstufige Vermahlung) bis zu etwa 100 ppm oder sogar darüber (zweistufige Vermahlung).

Der Erfindung liegt die Aufgabe zugrunde, eine Lebensmittelmasse, insbesondere eine suspendierte Partikel enthaltende Fettmasse wie z.B. Kakao- oder Schokolademasse bereitzustellen, die selbst bei hoher Feinheit der suspendierten Partikel einen möglichst geringen Metallanteil hat.

Diese Aufgabe wird gemäss Anspruch 1 gelöst, indem bei einem Verfahren zum Verarbeiten einer Lebensmittelmasse, insbesondere einer suspendierte Partikel enthaltenden Fettmasse, bei dem mittels einer Relativbewegung zwischen der in einem Prozessraum enthaltenen zu verarbeitenden Masse und einer die Masse berührenden Oberfläche einer Verarbeitungseinheit in die Masse mechanische Energie eingetragen wird. Erfindungsgemäss soll dabei mindestens ein Teil der die Masse berührenden und zu ihr relativ bewegten gesamten Oberflächen der Verarbeitungseinheit aus einem nicht-metallischen Material bestehen. Dadurch kann selbst bei einer langen und intensiven Verarbeitung, wie sie zur Herstellung einer hochfeinen Kakao- oder Schokolademasse notwendig ist, der Metallanteil im Endprodukt gering gehalten werden.

Zweckmässigerweise können in der Masse in dem Prozessraum ausserdem lose Hilfskörper verwendet werden, welche durch die Relativbewegung zwischen der Masse und der die Masse berührenden Oberfläche bewegt werden, wodurch eine Relativbewegung zwischen den Hilfskörpern und der Masse erfolgt. Vorzugsweise besteht dabei zumindest die Oberfläche der losen Hilfskörper aus einem nicht-metallischen Material. Dadurch wird gewährleistet, dass zumindest von den losen Hilfskörpern (Mahlhilfskörper, Mahlkugeln, Mahlperlen) kein metallischer Abrieb stammt.

Besonders vorteilhaft ist es, wenn das nicht-metallische Material ein Keramik-Material ist bzw. keramische Komponenten beinhaltet. Dies kann eine zumindest partielle Keramikbeschichtung besonders abriebgefährdeter Bereiche der Verarbeitungseinheit sein.

Vorzugsweise bestehen die losen Hilfskörper aus einem Keramik-Material. Die Erfindung geht diesbezüglich von der Erkenntnis aus, dass ein Grossteil (ca. 85%) des in einer Rührwerkskugelmühle in die Kakaomasse eingetragenen Metallanteils auf Abrieb von den metallischen Mahlkugeln während der Vermahlung zurückzuführen ist. Dies kann durch keramische Mahlkörper verhindert werden.

Selbst die gesamten dem zu verarbeitenden Lebensmittel exponierten Oberflächen des Prozessraumes können aus Keramik-Material bestehen.

Als Keramikmaterial können gesinterte Metalloxide wie ZrO₂, HfO₂, MgO und Y₂O₃ oder Kombinationen davon verwendet werden. Als besonders abriebresistent haben sich kugelförmige oder näherungsweise kugelförmige Mahlhilfskörper aus Keramikmaterial erwiesen, die vorzugsweise aus ZrO₂, HfO₂ oder MgO aufweisendem Mischoxid bestehen und 2% bis 8% Y₂O₃ enthalten. Besonders bevorzugt sind Keramik-Mahlkörper mit einem Anteil von 92% bis 98% ZrO₂ und HfO₂ sowie einem weiteren Anteil von 2% bis 8% Y₂O₃. Die Durchmesser der Mahlkörper liegen vorzugsweise im Bereich 3mm bis 8mm und besonders bevorzugt im Bereich 5mm bis 8mm.

Bei einer speziellen Ausführung der Erfindung weist die Verarbeitungseinheit eine Rotor-Stator-Maschine auf, in der zwischen dem Rotor und dem Stator der Prozessraum begrenzt wird, wobei die Relativbewegung zwischen der Masse und der sie berührenden Oberfläche durch Rotieren des Rotors relativ zum Stator erfolgt, und wobei mindestens ein Teil der in den Prozessraum weisenden Rotor-Oberfläche und/oder Stator-Oberfläche aus nicht-metallischem Material besteht. Bei der Herstellung hochfeiner Kakao- oder Schokolademasse kann damit selbst bei zweistufiger Vermahlung der Metallanteil im Lebensmittel gering gehalten werden.

Bei einer anderen speziellen Ausführung weist die Verarbeitungseinheit mindestens zwei Zylinderwalzen auf, zwischen denen und auf denen, d.h. im Walzenspalt und auf den Zylinderoberflächen, der Prozessraum gebildet wird, wobei die Relativbewegung zwischen der Masse und der sie berührenden Oberfläche durch Rotieren der beiden Zylinderwalzen erfolgt, und wobei mindestens ein Teil der Walzen-Oberflächen aus nicht-metallischem Material besteht. Dadurch gelangt beim Scheren und/oder Quetschen nur wenig Abrieb in das Lebensmittel. Bei der Herstellung hochfeiner Kakao- oder Schokolademasse kann damit selbst bei zweistufiger Walzwerk-Vermahlung der Metallanteil im Lebensmittel gering gehalten werden.

Die Erfindung bezieht sich auch auf ein Lebensmittelsmasse, insbesondere auf eine suspendierte Partikel enthaltende Fettmasse, die einen Metallgehalt von weniger als 60 mg Metall pro kg suspendierte Partikel in der Lebensmittelmasse und vorzugsweise einen Metallgehalt von weniger als 40 mg Metall pro kg suspendierte Partikel in der Lebensmittelmasse aufweist.

Vorzugsweise hat die erfindungsgemässe Lebensmittelmasse einen Metalloxidgehalt von weniger als 1 mg Metalloxid pro kg suspendierte Partikel in der Lebensmittelmasse und vorzugsweise einen Metalloxidgehalt von weniger als 0.5 mg Metalloxid pro kg suspendierte Partikel in der Lebensmittelmasse.

Bei einer speziellen Ausführung enthält die Lebensmittelmasse suspendierte Kakao-Partikel und/oder Zucker-Partikel.

Für solche erfindungsgemässen Schokoladen gilt dann entsprechend, dass sie einen Metallgehalt von weniger als 60 mg Metall pro kg Kakaoanteil in der Lebensmittelmasse und vorzugsweise einen Metallgehalt von weniger als 40 mg Metall pro kg Kakaoanteil in der Lebensmittelmasse aufweisen. Als Kakaoanteil gelten dabei alle Bestandteile, die aus dem Kakao stammen, d.h. Kakao-Partikel mit in diesen gebundenem Fett ("Kakaopulver") sowie freies Kakao-Fett ("Kakaobutter"). Den Rest der Lebensmittelmasse, insbesondere der Schokolade, bilden weitere Bestandteile, wie z.B. Zucker-Partikel, Milchfett bzw. Milchpulver, Lecithin und dgl.

Entsprechend gilt für solche erfindungsgemässen Schokoladen, dass sie einen Metalloxidgehalt von weniger als 1 mg Metalloxid pro kg Kakaoanteil in der Lebensmittelmasse und vorzugsweise einen Metalloxidgehalt von weniger als 0.5 mg Metalloxid pro kg Kakaoanteil in der Lebensmittelmasse aufweisen.

Die erfindungsgemässe Lebensmittelmasse wird vorzugsweise mittels eines der weiter oben geschilderten Verfahren hergestellt.

## Patentansprüche

1. Verfahren zum Verarbeiten einer Lebensmittelmasse, insbesondere einer suspendierte Partikel enthaltenden Fettmasse, wobei mittels einer Relativbewegung zwischen der in einem Prozessraum enthaltenen zu verarbeitenden Masse und einer die Masse berührenden Oberfläche einer Verarbeitungseinheit in die Masse mechanische Energie eingetragen wird, **dadurch gekennzeichnet, dass** mindestens ein Teil der die Masse berührenden und zu ihr relativ bewegten gesamten Oberflächen der Verarbeitungseinheit aus einem nicht-metallischen Material bestehen.

2. Verfahren nach Anspruch 1, **dadurch gekennzeichnet, dass** in der Masse in dem Prozessraum ausserdem lose Hilfskörper enthalten sind, welche durch die Relativbewegung zwischen der Masse und der die Masse berührenden Oberfläche bewegt werden, wobei eine Relativbewegung zwischen den Hilfskörpern und der Masse erfolgt, wobei zumindest die Oberfläche der losen Hilfskörper aus einem nicht-metallischen Material besteht.

3. Verfahren nach Anspruch 1 oder 2, **dadurch gekennzeichnet, dass** das nicht-metallische Material ein Keramik-Material ist.

4. Verfahren nach Anspruch 2 oder 3, **dadurch gekennzeichnet, dass** die losen Hilfskörper aus einem Keramik-Material bestehen.

5. Verfahren nach einem der Ansprüche 1 bis 4, **dadurch gekennzeichnet, dass** die Verarbeitungseinheit eine Rotor-Stator-Maschine aufweist, in der zwischen dem Rotor und dem Stator der Prozessraum begrenzt wird, wobei die Relativbewegung zwischen der Masse und der sie berührenden Oberfläche durch Rotieren des Rotors relativ zum Stator erfolgt, und wobei mindestens ein Teil der in den Prozessraum weisenden Rotor-Oberfläche und/oder Stator-Oberfläche aus nicht-metallischem Material besteht.

6. Verfahren nach einem der Ansprüche 1 bis 4, **dadurch gekennzeichnet, dass** die Verarbeitungseinheit mindestens zwei Zylinderwalzen aufweist, zwischen denen (Walzenspalt) und auf denen (Zylinderoberfläche) der Prozessraum gebildet wird, wobei die Relativbewegung zwischen der Masse und der sie berührenden Oberfläche durch Rotieren der beiden Zylinderwalzen erfolgt, und wobei mindestens ein Teil der Walzen-Oberflächen aus nicht-metallischem Material besteht. (Scheren und/oder Quetschen)

7. Lebensmittelsmasse, insbesondere suspendierte Partikel enthaltende Fettmasse, **dadurch gekennzeichnet, dass** sie einen Metallgehalt von weniger als 60 mg Metall pro kg suspendierte Partikel in der Lebensmittelmasse aufweist.

8. Lebensmittelsmasse nach Anspruch 7, **dadurch gekennzeichnet, dass** sie einen Metalloxidgehalt von weniger als 1 mg Metalloxid pro kg suspendierte Partikel in der Lebensmittelmasse aufweist.

9. Lebensmittelmasse nach Anspruch 7 oder 8, **dadurch gekennzeichnet, dass** sie suspendierte Kakao-Partikel enthält und einen Metallgehalt von weniger als 60 mg Metall pro kg Kakaoanteil (= Menge aller Kakaobestandteile) in der Lebensmittelmasse aufweist.

10. Lebensmittelsmasse nach Anspruch 9, **dadurch gekennzeichnet, dass** sie einen Metalloxidgehalt von weniger als 1 mg Metalloxid pro kg Kakaoanteil in der Lebensmittelmasse aufweist.

11. Lebensmittelmasse nach einem der Ansprüche 7 bis 10, **dadurch gekennzeichnet, dass** sie suspendierte Zucker-Partikel enthält.

12. Lebensmittelmasse nach einem der Ansprüche 7 bis 11, **dadurch gekennzeichnet, dass** sie mittels eines Verfahrens nach einem der Ansprüche 1 bis 6 hergestellt wurde.
